**Europäisches Patentamt**

**European Patent Office**

**Office européen des brevets**

(19)

(11) Publication number: **0 118 289**

**A2**

(12) # EUROPEAN PATENT APPLICATION

(21) Application number: **84301370.7**

(22) Date of filing: **02.03.84**

(51) Int. Cl.³: **B 65 B 69/00**

(30) Priority: **08.03.83 GB 8306329**

(43) Date of publication of application:
**12.09.84 Bulletin 84/37**

(84) Designated Contracting States:
**DE FR GB IT**

(71) Applicant: **TINGEY & COMPANY (ENGINEERS) LIMITED**
**Eastwood Street**
**London, SW16 6QD(GB)**

(72) Inventor: **Ivil, Anthony Mervyn Victor**
**61 Belmont Lane**
**Chislehurst Kent(GB)**

(72) Inventor: **Greenhead, David Leonard**
**82 Poverest Road**
**Orpington Kent(GB)**

(74) Representative: **Harvey, David Gareth et al,**
**Graham Watt & Co. Riverhead**
**Sevenoaks Kent TN13 2BN(GB)**

(54) Method and apparatus for use in de-packaging packaged goods.

(57) Apparatus for a process of recovering e.g. cigarettes from faulty packets includes a rotary sorter (II) having a hopper (13) for depositing the packets on a turntable (12) having a stationary spiral guide wall associated therewith, friction between moving packets and the wall (26) orienting the packets for onward feeding in a direction lengthwise of the packets to a first slitter (33). The first slitter makes shallow cuts down each long, shallow side of a packet which is then conveyed, without turning, to a second slitter (45), the latter functioning to cut the packet in two. The cigarettes and the packaging fragments are thereafter separated in a rotary, inclined screening drum having slats spaced apart sufficiently to pass cigarettes only, the packaging fragments being retained in the drum.

FIG.1

EP 0 118 289 A2

- 1 -

"METHOD AND APPARATUS FOR USE IN DE-PACKAGING
PACKAGED GOODS"

The present invention relates to a method and apparatus for use in de-packaging packaged goods.

It is commonplace for many consumer products to be marketed in packages or cartons, rather than loose. Packaging and handling machines are extensively used and if they misfunction for any reason damaged packages may result. Of course, packages may suffer other mishaps leading to damage which render them unsaleable or of reduced sale value. There is a need for equipment which efficiently releases the contents from damaged packets or cartons, especially where the contents have a high intrinsic value.

The tobacco industry is one example where the need for efficient depackaging means is felt. At one time in this industry there was one minder per packaging machine. This minder had ample time to watch out for damaged packets, to collect them and then open them by hand to recover their contents, for instance cigarettes. Nowadays one minder may supervise several, e.g. five, packaging machines. It is no longer possible for this one minder to keep pace and to perform the tasks of detecting, collecting and recovering. The aid of an automatic depackaging facility has become highly desirable if not practically necessary.

We are aware of one proposal for a depackaging machine for the tobacco industry. According to this, cigarette packages are laid down flat and passed under a slasher which makes a plurality of cuts lengthwise of the packet through its top surface. The package is then bent lengthwise about its opposite, unslashed surface to release the cigarette remnants therefrom. The operation of such a depackaging machine is far from ideal. Firstly, the cigarettes are shredded including filter tips which they may have. Contamination of the tobacco by filter tip material and also by packaging fragments is extremely difficult to rectify. Secondly, the prior proposal envisages feeding the damaged packets manually, one-by-one. This is a slow process and costly.

We have been seeking an improved method and apparatus for depackaging tobacco products enabling ready recovery of the tobacco. We have also been seeking a means of sorting packages received at random into a well-defined delivery stream in which the packages are all in a predetermined orientation.

The package sorting and delivery machine which we have designed serves as a feeder for our depackaging system, but could be used in the packaging and processing industry - and other industries - where it is desired to convert a random feed of objects into a neat, serial stream thereof.

The basis of our approach to depackaging is to slit packages in two, in two different directions at right angles. Such slitting of the packaging facilitates separation of the packaging fragments from the contents and minimises contamination thereof by said fragments. Our method and apparatus are primarily meant for depackaging tobacco goods though they are applicable for depackaging other commodities such as tea, coffee and cocoa amongst beverages, foods and toiletries.

When our preferred apparatus is used for opening packages of cigarettes, the packaged cigarettes are cut in half (normal to their length) and in this state are released from their packets. The tobacco is recovered from the cigarette paper and filter tips by known tobacco-recovery systems which are not part of this invention.

According to one aspect of the present invention, there is provided a method of recovering packaged products from their packaging, characterised by the steps of conveying randomly-arranged packages towards a slitting station while aligning them into a common orientation and feeding them one-by-one in this orientation to the said station, each package in the course of passing through the slitting station being slit on two different angularly-related planes which may be substantially at right angles, one of the slits severing the packages into two separate parts which are thereafter fed to means which liberate the products from the packaging fragments resulting from the slitting operations.

The products can be liberated from the package fragments by screening. Thus, the slit packages leaving the slitting station can be fed to a screening means having apertures only large enough to pass the product to be recovered but too small to pass the packaging fragments. An initial separation can be accomplished by allowing the product and fragments to fall under gravity to the screening means. Separation can optionally be initiated by squeezing the slit packages as they leave the slitting station.

In the case of products such as cigarettes contained in rectangularly shaped packs or cartons, the first slitting is performed lengthwise of the packs through each of its two shallow sides, the depths of this slitting being limited such that only the packaging is cut, and not the cigarettes. The second slitting is performed crosswise to the length of the packs to cut them from top to bottom and cut the cigarettes in two. This slitting sequence is preferred for reliability, but could be reversed.

Also according to this aspect of the invention, there is provided apparatus for recovering packaged products from their packaging, characterised by means to convey randomly-arranged packages to a sorter which turns the packages into a common orientation and delivers them one-by-one in this orientation to a feeder for onward passage to a first slitter, whereat the packages are slit in a first plane, means to convey the so-slit packages to a second slitter whereat the packages are subjected to a second slitting in a plane different from the first plane, and means to deliver the slit packages leaving the second slitter to a separator which discharges the product separately from packaging fragments produced by the two slitting operations, one of said slitters being arranged to cut through the packages to sever them into two parts.

The separator can conveniently comprise a rotationally–driven slatted drum, wherein gaps between the slats defining the drum allow passage of the product, e.g. cigarettes, radially from the drum, but not the packaging fragments. The drum is preferably inclined so as to encourage packaging fragments retained therein to flow to a lower, discharge end of the drum. Other screening means could be used instead, such as vibrating mesh screens. The choice will be governed inter alia by the type of product to be recovered. The slatted drum is presently preferred when retrieving tobacco products such as cigarettes and cigars from packets.

At least a preliminary separation of the packaging fragments from the product can be obtained before admission to the separator, by placing the latter beneath the end of a conveyor which delivers the slit packages from the second slitter, and by causing the slit packages to fall under gravity down a chute into the separator. Optionally, squeezing means such as coacting, converging conveyor flights are located between the second slitter and the separator to squeeze the slit packages, to help initiate separation of the packaging fragments from the product. In either event, the slit packages may reach the separator with their contents already liberated from the packaging fragments.

The said feeder for the first slitter and the said conveying means which convey slit packages to the second slitter are both constructed so as to advance packages positively. Both the feeder and the said conveying means can comprise conveyors, for example of overhead type, with their conveying flights furnished with pusher elements which engage the rear ends (as viewed in the advancing direction) of the packages. The feeder and the said conveying means may operate in timed relation or synchronously with one another and with an intermittently-operable gate between the feeder and the said conveying means to control the delivery of packages to the latter.

In the preferred embodiment, one slitter comprises cutters spaced apart to either side of the path of movement of packages past said slitter, for partially slitting the packages along two opposite sides thereof, and in that the other slitter comprises a cutter located in the path of movement of packages past the said other slitter, for cutting the packages in two. Preferably, packages encounter the said one slitter first. This embodiment includes means to obtain an effective change in orientation of the packages during movement from one slitter to the other slitter whereby the slits made by the slitters are respectively directed longitudinally and transversely of said packages. For example, the feeder and said conveying means may be disposed mutually at right angles, and packages are transferred from the first slitter to the conveying means without being turned.

The preferred sorter represents the second aspect of the present invention.

According to this aspect of the invention, there is provided a sorting machine, for use in the aforesaid apparatus, for receiving packages or other objects in random array and for discharging them one-by-one all in a common orientation, characterised by comprising a turntable surmounted by a receiving hopper which releases objects in turn to the turntable, means for tipping over objects received on the turntable until they lie with a major face in contact therewith, and means to turn the objects into a common orietation such that the longest dimension of each is aligned substantially with the direction in which they are being moved by the turntable, the turning means including a retarding device positioned to be intercepted by the moving objects lying on the worktable, said device extending obliquely of the table, e.g. in a spiral path, outwardly from the vicinity of the hopper towards a discharge position at the periphery of the turntable.

The retarding device may define a progressively-narrowing channel with an upstanding guide or rim associated with the turntable periphery. The width of the channel can approximate to a lateral dimension or width, of each object in the neighbourhood of the discharge position. By this means, objects aligned in the desired orientation are unable inadvertently to migrate significantly from this orientation as they approach the discharge position.

The retarding means may conveniently be located in a spiral path leading outwardly from the hopper towards the discharge position.

The retarding means can take any form so long as it is capable of causing intercepted objects moving relative thereto, with - and by - the turntable, to spin thereon into the desired attitude with their longest dimensions aligned with their direction of movement. The presently preferred retarding means is a spirally-arranged, stationary guide wall leading outwardly from the hopper. The spiral wall has an object-engaging, radially-outwardly facing surface having frictional characteristics with respect to the turntable effective to turn, or spin, the objects as necessary.

In case the retarding means fails to turn some objects into the desired attitude, means can be provided to knock them from the turntable into a collector. An example is a rotating flail. Alternatively, means can be provided to sweep slightly misoriented objects appropriately into contact with the retarding means.

An obstacle or barrier, e.g. brush element, or plurality of brush elements can serve to tip the objects over into their supine position on the turntable. Said element(s) could be aided by a barrier above the turntable, under which objects in the supine position only can pass.

The preferred hopper comprises a crowned or dome-shaped base, rotatable with the turntable, and a stationary sidewall having an outlet opening for releasing objects to the turntable. The hopper can, for instance, have an outlet opening through which only one object can exit at a time. The opening could perhaps allow more than one object to exit simultaneously or in quick succession, if the turntable possesses means to separate the objects entrained thereon. The turntable is preferably furnished anyway with a separating means to ensure the objects do not inadvertently crowd together thereon.

The base of the hopper is desirably of such a nature that objects reaching the base are positively advanced to the outlet opening. The base could have a surface presenting a high coefficient of friction to the objects. Alternatively, its surface configuration may be such as to abut directly against the objects to advance them as the base rotates. In the preferred embodiment, the base is a wire mesh fabrication. It may carry a high-friction surfacing arranged in a cruciform pattern. Friction between packs on the base and the arms of the cruciform assures advancement of the packs to the outlet opening.

Further details of the foregoing aspects of the invention will now be described, by way of example only, in the following description to be read in conjunction with the accompanying drawings, in which:

Fig. 1 is a plan view of cigarette depackaging machinery according to the invention,

Fig. 2 is an enlarged plan view of a sorter, also according to the invention, which forms part of the machinery shown in Fig. 1,

Fig. 3 is a side view of a first slitter and conveyors associated therewith in the machinery shown in Fig. 1,

Fig. 4 is a side view of a second slitter, a feeder and a discharge means therefor of the machinery shown in Fig. 1,

Fig. 5 illustrates means to transfer packets between two conveyors of the depackaging machinery,

Fig. 6 is a side view showing an alternative second slitter, the feeder and the discharge means therefor, and

Fig. 7 is a side view of screening means which separates the tobacco product from packaging fragments.

A general outline of the depackaging machinery will first be given, and its individual parts and their functions will then be described in more detail.

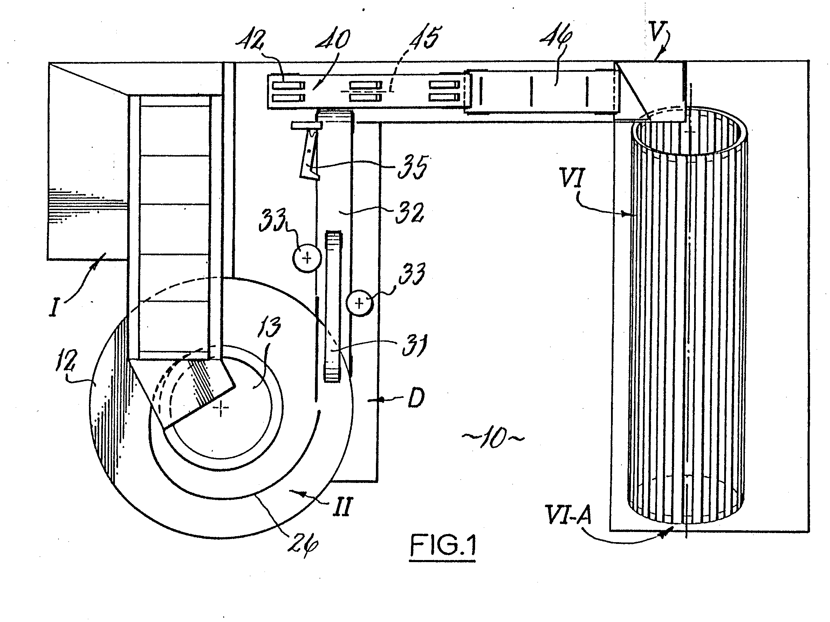

Referring to Fig. 1, the machinery 10 includes an infeed elevator or conveyor I of any convenient type for conveying damaged cigarette packets to a sorter device II. Desirably the elevator I runs at constant speed and is speed controllable. Beneficially, there are means to inhibit packs bunching together, for example a rotary brush (not shown) positioned above the conveying surface of the elevator I to knock back packs bunched together and riding one on top of another. The sorter device II establishes an even flow of packages, all aligned in a common direction, for feeding to slitting means to be described in detail hereafter. Packets are slit lengthwise down their opposite sides by a first slitter and are then transferred to a second slitter. The latter slits the packets in two across their widths. The first slitter cuts shallow slits along the two sides parallel to the major dimension of the packet and normally approximately mid-way between its major faces. The second slitter cuts through each packet in a plane traversing its width and normal to its thickness. The slits will normally be substantially at right angles to one another. Packets cut in two and leaving the second slitter are conveyed to a chute V down which they fall into an inclined drum screening means VI. The screening means VI is responsible for actually separating the cigarettes from the packaging remnants. The latter
are discharged for waste collection at a bottom
end VI-A of the screening means VI. The cigarettes -
which have been cut in two by the second slitter -
alone pass through the wall of the screening
means VI. Beneath the screening means is a
conveyor or other collector for gathering the
cigarettes which are then supplied to a tobacco-
retrieving machine of any known type used to recover
their tobacco content.

The apparatus arranged as shown is well suited
for depackaging cigarettes contained in packets
that are taller or longer than their widths, e.g. flip-
top cartons.

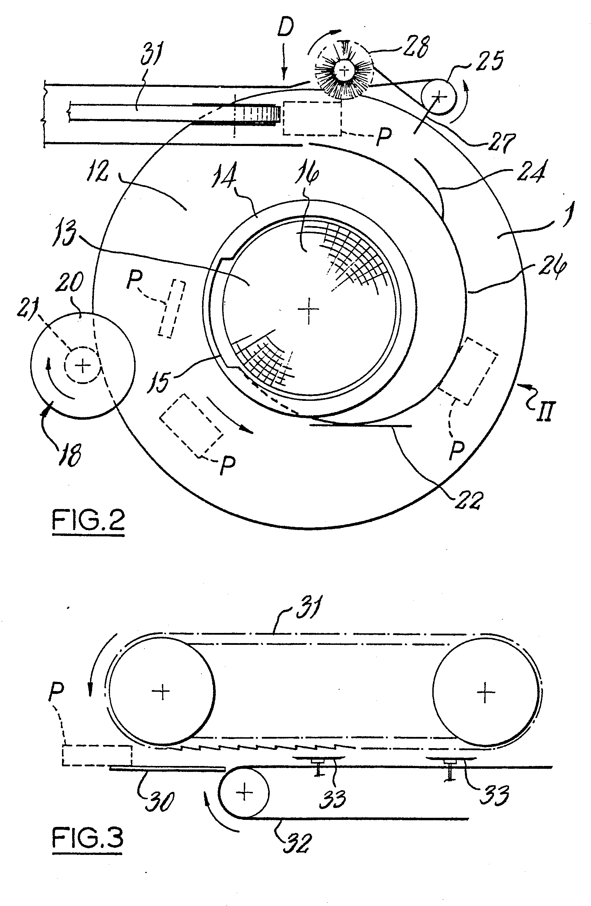

The sorter II is shown in more detail in Fig. 2.
The sorter comprises a turntable 12 surmounted by a
hopper 13 which receives incoming packets from the
elevator I. The turntable 12 rotates at a low speed,
e.g. about 12 r.p.m., which should be substantially
constant. The sorter may discharge about 60 packs/
minute to the slitters. The hopper has a stationary
side wall 14 with an outlet cutout or opening 15, and
a base 16 which rotates with the turntable 12. The
base 16 is crown or dome shaped. Packets reaching
the base 16 will tend, therefore, to move towards
the side wall 14 as the base rotates and ultimately will issue from the hopper via the opening 15.
The base 16 can have any surface which will move
packets therewith. The base 16 could have a high
friction surface, or projections to engage the packets
and drive them positively around the hopper. In
the illustrated arrangement, positive driving is
achieved by the base being formed from a wire mesh.
A cruciform pattern of frictional material can be
coated on the mesh. The four radial arms of said
pattern act to sweep any packs which may temporarily
come to a stop in the hopper towards the outlet
opening 15.

Packets reach the turntable 12 via the opening
15. The opening may be large enough only to allow
one packet at a time to pass. This is not essential,
however, and it may be tolerable for two or more
packets to exit simultaneously or in quick succession.
This is because a separator 18 is provided,
conveniently opposite the opening 15, to counteract
any crowding together of packets as they reach the
turntable. The separator comprises a flexible disc 20
driven by the periphery of the turntable through a
wheel 21 fast with the disc. Packets contacting the
driven disc 20 are advanced momentarily along the
turntable 12 and thus separated from adjacent packets.

The packets drop onto the turntable 12 from the hopper 13 in disarray. Some will come to rest on one major face, others on their sides and still others on their ends. The sorter II has the task of arranging and discharging the packets all in a common attitude and orientation, in which the packets have a particular alignment and their major faces horizontally disposed. The first step in orienting the packets is to place them all with their major faces horizontal. Any upstanding packet is thus tipped over to lie supine on the turntable 12. Means to tip over the packets comprise a stationary guide plate 22. The said means could be other obstructions, instead. Thus, one or more stationary arms (not shown) can be spaced above the turntable, said arms e.g. carrying brushes for engaging and knocking over upstanding packets. Should any packet "piggyback" on another, the arms will sweep them apart. The guide plate 22 or arm(s) are conveniently attached to an arcuate guide wall to be described.

In the absence of arms as described, "piggy-backing" or the resting of packets one on another can be eradicated in other ways. In the illustrated embodiment, there is a curved deflector 24 spaced above the turntable by a distance at least as great as the packet thickness. When a packet lying upon another encounters the deflector 24, it is shifted outwardly into the path of an ejector device 25. The ejector 25 comprises a rotationally driven flail formed by a flexible strip 27. As it rotates, the ejector knocks packets swept toward it by deflector 24 off the turntable e.g. into a collector bin. Such packets can then be returned to elevator I.

The sorter II further includes means 26 to turn the supine packets into a common alignment so that ultimately they leave the sorter in a given orientation. The orientation has the longest dimension of each packet aligned substantially with the direction in which it is being moved with - and by - the turntable. In this orientation, the longest dimension is substantially normal to a radius of the turntable 12 passing through the packet. At a discharge position D of the sorter, the packets leave in a tangential direction with their longest dimensions aligned with this direction. See the packet P illustrated at the discharge position D.

The said turning means 26 comprises a retarding device arranged obliquely of the turntable 12. The retarding device extends from the hopper side wall 14 towards the discharge position D and in this example is an arcuate guide wall. The guide wall is spirally arcuate. It has a facing contactable by packets which has such frictional characteristics relative to the top of the turntable 12 as to cause packets to spin thereon until one of their long sides is brought to run in contact with the guide wall. Trial and error experimentation will yield a suitable balance between the frictional characteristics of the guide wall facing and the turntable which result in packets being turned reliably to the desired orientation. By way of example, with a turntable having a lathe-turned surface, satisfactory operation is achieved when the said facing comprises a 100 grit abrasive cloth. The guide wall may define a channel with an optional radially outer guide (not shown) adjacent the periphery of the turntable. This channel is of decreasing width towards the discharge position D. In the neighbourhood thereof, the confines of the channel prevent packets shifting from the proper alignment established by the turning means 26.

It could sometimes happen that a packet is not turned appropriately by the turning means 26. The ejector device 25 serves to guard against delivery of wrongly oriented packets from the discharge position D. The flexible flail element 27 may either knock improperly oriented packets off the turntable 12, or spin them enough to bring their longest sides towards running contact with the turning menas 26. Advantageously, the sorter has a rotary brush element 28 adjacently downstream of the ejector device to nudge slightly misoriented packets towards the turning means 26 and thereby realign them for discharge.

The sorter II delivers packets one at a time over a delivery plate 30 with the help of a conveyor 31, see Fig. 3. This conveyor has an overhead conveying flight with a serrated or saw-tooth surface configuration. Packets moved across the plate 30 are advanced onto another conveyor 32. Thanks to the said surface configuration and coaction between the conveyors 31, 32, the packets are positively held and moved past the first slitter. The confronting portions of the conveyors squeeze and push the packets forwardly and may flatten mishapen packets appropriately.

The first slitter comprises a pair or circular knives 33 turning on vertical rotation axes. Each knife is located in a plane approximately mid-way between the conveying flights of conveyors 31, 32. The knives are located one to either side of the path of movement of the packets and are staggered along this path, i.e. one knife is further upstream than the other. These knives slit the packets lengthwise down their long sides. Their depths of cut may be quite shallow, say 4 mm or so. The knives 33 could be directly opposite one another, but staggering is found to give more reliable operation and hence is preferred.

The conveyor 32 carries the longitudinally slit packets leaving the first slitter to a gate 35 which controls the passage of packets to a feeder 40 for the second slitter. The gate operates in timed relation with the feeder so that packets are fed by the conveyor 32 at proper intervals to be received by the feeder.

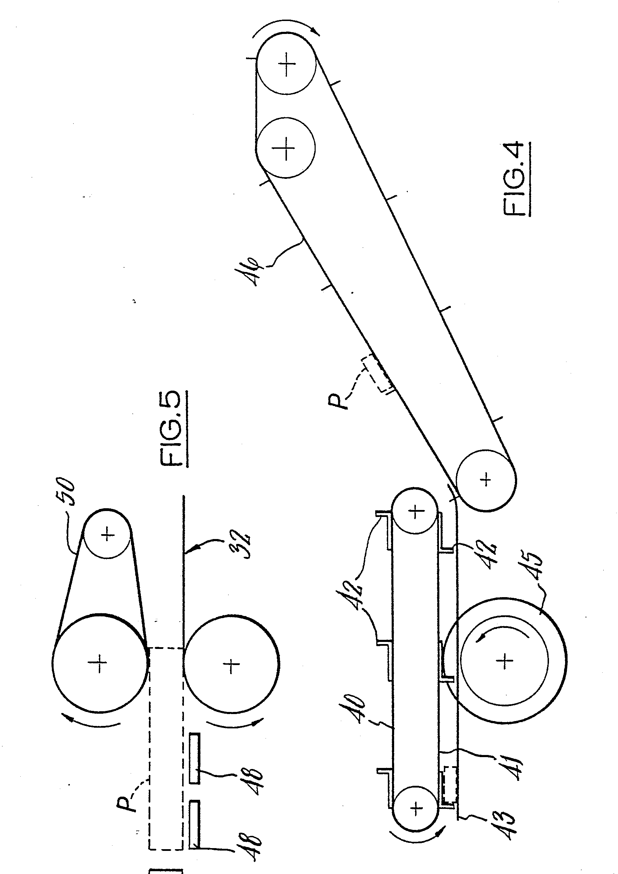

The said feeder 40, see Fig. 4, is an overhead conveyor having projecting pusher elements 42. The pushers 42 depend from the conveyor lower flight 41 adjacent a stationary support 43 and advance packets thereon singly across a slitting wheel 45 which comprises the second slitter. Slitting wheel 45 rotates on a horizontal axis and cuts each packet completely in two from top to bottom, e.g. into equal parts.

Feeder 40 receives packets from conveyor 32 which is at right angles thereto, and the packets are not turned at all in transfer from conveyor 32 to feeder 40. The motion of the packets by feeder 40 is such that their lengthwise direction is normal to the feed direction. Slitting wheel 45 therefore cuts the packets transversely and hence cuts the cigarettes therein across the middle thereof.

The feeder 40 delivers the so slit packets to an elevator 46 which in turn conveys them to the chute V.

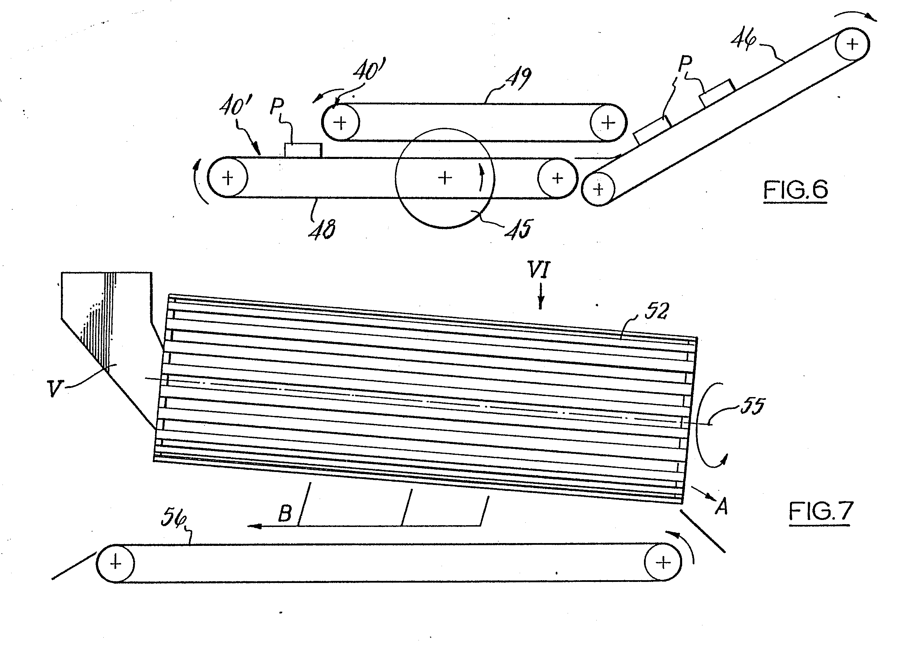

The gate mechanism is not indispensible for appropriate transfer from the conveyor 32, if the feeder is of another form. A suitable transfer means is shown in Fig. 5 and the example of a feeder 40' cooperable therewith is shown in Fig. 6.

As shown in Fig. 5, the downstream end of conveyor 32 is adjacent the lower one 48 of two parallel, confronting conveyors 48, 49 constituting feeder 40'. Conveyor 32 is located beside an infeed end of conveyor 48 which has its conveying flight slightly below the level of that of conveyor 32. A short conveyor 50 is disposed above the downstream end portion of conveyor 32. Operating in conjunction, conveyors 32 and 50 deliver packets P forwardly over conveyor 48, maintaining each one clear of the latter until they escape from the nip between conveyors 32 and 50. As each packet leaves the nip, it drops onto conveyor 48 in the orientation proper for feeding to the second slitter.

Each packet deposited on conveyor 48 is advanced thereby under conveyor 49. The two conveyors have high friction surfaces and grip the packets so as to feed them positively through the second slitter 45. This is identical to the slitter of Fig. 4 and conveyance of the severed packets to the chute V is via elevator 46 as before.

Like conveyor 31, conveyor 49 could be serrated.

The slitting wheels 33, 45 divide the packets into four: the four parts of each packet will normally be of equal size but this is not essential.

To help later liberation of cigarettes from packet remnants, the severed packets could be fed into a squeezer before they are deposited in the chute V. The squeezer may consist of a pair of conveyors (not shown) side-by-side. Their confronting conveying flights lie in vertical planes and are mutually inclined to produce a tapering passage for the advancing slit packets. Thanks to this taper, the slit packets are squeezed laterally as they advance and the squeezing action starts to free the cigarettes from the packet remnants. The cigarettes and packet remnants are then delivered into the chute V.

The squeezing station can be located between the second slitter 45 and the elevator 46. Alternatively, the squeezing station could be disposed anywhere along the elevator 46. It has been found that adequate separation of cigaretts and packet remnants occurs in the chute V and the screening means VI, so the provision of a squeezing station is regarded as an option only.

Liberation of cigarettes from the packet remnants proceeds as they tumble down the chute V under gravity.

The chute V delivers the cigarettes and packet fragments into the open top end of the downwardly sloping screening means VI, see Fig. 7. This screening means is a cylindrically-shaped, slatted drum 52. The drum rotates about its inclined longitudinal axis 55. The wall of the drum is

0118289

- 24 -

defined by longitudinal slats spaced apart
sufficiently to pass cigarettes but too closely
to pass the packet remnants. The said remnants
are thus retained within the drum and slowly
migrate towards the lower end. The remnants
ultimately issue as waste from this end of the
drum, in the direction of arrow A. Meanwhile,
cigarettes passing through the wall of the drum
fall into collecting bins or directly onto a
conveyor 56, for discharge in the direction of
arrow B. Their tobacco is retrieved by known
machines as aforesaid.

The foregoing description has been directed
to a cigarette recovering machine installation.
The principles of operation of the method has been
explained and it will be understood that these
principles may be embodied in machine installations
for recovering other commodities from packages
thereof.

In the foregoing description, the first
slitting operation makes the longitudinal cuts
and the second slitting operation divides the
packets into two. This slitting sequence has
been found the most reliable for cigarette packets.
However, in principle the slitting operations could be performed in the opposite order.

The preferred embodiment conveys the packets past the slitters along paths which are at right angles to one another. This is very convenient considering the desire to make cuts which intersect at right angles, since there is no need to turn the packets. The conveyor 32 and feeder 40, 40' could, however, be aligned or parallel, in which case the packets will be turned as they are transferred to the feeder. In an alternative construction, the packets might be advanced without turning along a single path past the two slitters, when the transverse slitter would be mounted to traverse the path repeatedly to effect the transverse cutting operation.

For certain markets, cigarettes are packed in packets which are wider than their lengths (the latter being considered lengthwise of the cigarettes). Such packets may contain an internal tray holding the cigarettes. To depackage in this case, the packets will be moved along one straight path containing both slitters. Conveniently, the first slitter will cut into the two opposite sides which are parallel to the cigarettes, and the second slitter will divide each packet by a cut from top to bottom running down the middle thereof, again parallel to the cigarettes. This cut will, of course, be aligned with the direction of movement of the packets so no turning of the packets nor transverse movement of the slitter will be involved.

Claims:

1. A method of recovering packaged products from their packaging, characterised by the steps of conveying randomly-arranged packages towards a slitting station while aligning them into a common orientation and feeding them one-by-one in this orientation to the said station, each package in the course of passing through the slitting station being slit on two different angularly-related planes which may be substantially at right angles, one of the slits severing the packages into two separate parts which are thereafter fed to means which liberate the products from the packaging fragments resulting from the slitting operations.

2. A method according to claim 1, characterised by the liberating step being performed by feeding the said separate parts to a screening means having apertures large enough to pass the product to be recovered but too small to pass the packaging fragments.

3. A method according to claim 2, characterised by an initial separation being accomplished by allowing the product and fragments to fall under gravity to the screening means.

4. A method according to claim 1, 2 or 3, for recovering cigarettes from the packs thereof, characterised in that one slitting operation is performed crosswise to the length of the packs to cut them from top to bottom and cut the cigarettes in two.

5. A method according to claim 4, characterised in that another slitting operation is performed lengthwise of the packs through each of their two shallow sides, the depths of the slits being limited and confined substantially so that only the packaging is cut.

6. Apparatus for recovering packaged products from their packaging, characterised by means (I) to convey randomly-arranged packages to a sorter(II) which turns the packages into a common orientation and delivers them one-by-one in this orientation to a feeder (32) for onward passage to a first slitter (33), whereat the packages are slit in a first plane, means (40, 40') to convey the so-slit packages to a second slitter (45), whereat the packages are subjected to a second slitting in a plane different from the first plane, and means (46) to deliver the slit packages leaving the second slitter (45) to a separator (VI) which discharges the product separately from packaging fragments produced by the two slitting operations, one of said slitters being arranged to cut through the packages to sever them into two parts.

7. Apparatus according to claim 6, characterised in that the separator (VI) comprises a rotationally-driven slatted drum (52) wherein gaps between the slats allow passage of the product, but not the packaging fragments, the drum preferably being inclined to encourage packaging fragments retained therein to flow to a lower, discharge end thereof.

8. Apparatus according to claim 6 or claim 7, characterised by a chute (V) to conduct the split packages from the delivering means (46) to the separator (VI), thereby to obtain a preliminary separation of the packaging fragments from the product as the slit packages fall down the chute under gravity into the separator (VI).

9. Apparatus according to any of claims 6 to 8, characterised by squeezing means such as coacting, converging conveyor flights located between the second slitter (45) and the separator to squeeze the slit packages and initiate separation of packaging fragments from the product.

10. Apparatus according to any of claims 6 to 9, characterised in that one slitter comprises cutters (33) spaced apart to either side of the path of movement of packages past said slitter, for partially slitting the packages along two opposite sides thereof, and in that the other slitter comprises a cutter (45) located in the path of movement of packages past the said other slitter, for cutting the packages in two.

11. Apparatus according to claim 10, characterised by means to obtain an effective change in orientation of the packages during movement from one slitter (33) to the other slitter (45), whereby the slits made by the slitters are respectively directed longitudinally and transversely of said packages.

12. Apparatus according to claim 11, characterised in that the feeder (32) and the conveying means (40, 40') are disposed mutually at right angles to move the packages along paths at right angles, and in that the feeder (32) or transfer means (50) associated therewith is adapted to transfer the packages to the conveying means (40, 40') without turning them.

13. Apparatus according to any of claims 6 to 12, characterised in that the said feeder (32) and said conveying means (40, 40') each comprise an overhead conveyor (31, 49) adapted to feed the packages positively past their associated slitters (33, 45).

14. A sorter for use in the apparatus according to any of claims 6 to 13, for receiving packages or other objects in random array and for discharging them one-by-one all in a common orientation, characterised by comprising a turntable (12) surmounted by a receiving hopper (13) which releases objects in turn to the turntable, means (22) for tipping over objects received on the turntable until they lie with a major face in contact therewith, and means to turn the objects into a common orientation such that the longest dimension of each is aligned substantially with the direction in which they are being moved by the turntable (12), the turning means including a retarding device (26) positioned to be intercepted by the moving objects lying on the turntable, said device extending obliquely of the table, e.g. in a spiral path, outwardly from the vicinity of the hopper (13) towards a discharge position (D) at the periphery of the turntable (12).

15. A sorter according to claim 14, characterised in that the retarding device is a spirally-arranged, stationary guide wall (26) leading outwardly from the hopper (13) and having an object-engaging, radially-outwardly facing surface having frictional characteristics with respect to the turntable effective to turn, or spin, the objects as necessary into the desired common orientation.

16. A sorter according to claim 14 or claim 15, characterised by means (25, 27) operable on incorrectly oriented objects upstream of the discharge position (D) to knock them from the turntable (12) into a collector or by means (28) such as a rotary brush upstream of the discharge position (D) to sweep such objects into contact with the retarding device (26) for re-orientation thereby.

17. A sorter according to any of claims 14 to 16, characterised in that the hopper (13) comprises a crowned base (16) rotatable with the turntable, and a stationary sidewall (14) having an outlet opening (15) for releasing objects to the turntable (12), the turntable (12) preferably being furnished with a separating means (20, 21) adjacent said opening (15) to ensure objects leaving the opening do not inadvertently crown together on the turntable.

FIG.1

FIG.2

FIG.3

FIG.5

P

48    48

32

50

40    42

43    41

45    42

P

46

FIG.4

3/4

0118289

FIG.6

FIG.7

0118289